# EUROPEAN PATENT APPLICATION

(11) **EP 0 766 493 A2**
(43) Date of publication of application: **02.04.1997**
(21) Application number: 96307029.7
(22) Date of filing: 26.09.1996
(51) Int. Cl.: H04Q 11/04, H04N 7/12

(54) **Video telephony call connection**

(30) Priority: 27.09.1995 GB 9519657
(71) Applicant: GPT LIMITED, Coventry, CV3 1HJ (GB)
(72) Inventor: Carter, Roger Kenneth, Fleet, Hampshire GU13 0AB (GB); Newman, Sean Anthony, Maidenhead, Berkshire SL6 3HS, (GB); Fitzgerald, John Lewis, Maidenhead, Berkshire SL6 7AH, (GB)
(74) Representative: Branfield, Henry Anthony

(57) **Abstract**

1. A multi-channel Narrowband Integrated Services Digital Network (N-ISDN) based video-telephony, video-conferencing or multimedia call from a first Digital Termination Equipment (DTE) to a second DTE may be initiated by:
making a call via an initial channel from the first DTE to the second DTE using the procedures of ISO/IEC 13871 (ISO-Agg);
the first DTE obtaining from the second DTE information regarding channel number identification of additional second DTE channels and capability of support for the procedures of ITU-T recommendation H.221 (ITU-Agg) by the second DTE;
and reverting to a multi-channel multiplexing technique described in ITU-Agg and aggregating the initial channel with the additional channels to make the multi-channel connection.

## Description

The present invention relates to communications networks and more particularly to optimization of call set up of aggregated multiple channels from a video-telephone or multimedia terminal and includes a visual-telephony system that gains the benefits of one form of call connections described by one aggregation technique, although the aggregation facility is not used, and call maintenance described by a differing multi-channel aggregation thereby gaining the better points of both systems.

Video-conferencing or video-telephony are services described in various International Telecommunications Union (ITU) recommendations.

Some video-telephony equipment uses digital communication over the Plesiochronous Digital Hierarchy networks described as Narrowband ISDN.

A recognized means of making connections for a high bit rate service is to use a means of aggregation of multiples of the basic rate channels (64 kbit/s or 56 kbit/s depending on the network) to form the higher rate channel, each of which basic rate channels may take a different path through the network and must therefore be temporarily re-aligned before decoding.

According to the present invention there is provided a method of initiating a multi-channel Narrowband Integrated Services Digital Network (N-ISDN) based video-telephony, video-conferencing or multimedia call from a first Digital Termination Equipment (DTE) to a second DTE each DTE comprising an aggregator and comprising the steps of:
a) making a call via an initial channel from the aggregator of the first DTE to the aggregator of the second DTE using the procedures of ISO/IEC 13871 (ISO-Agg); which procedures provide high bandwidth control and communication capability for the initial channel;
b) the first DTE obtaining from the second DTE information regarding channel number identification of additional second DTE channels and capability of support for the procedures of ITU-T recommendation H.221 ITU-Agg by the second DTE;
c) using the high bandwidth control and communication capability of the initial channel and reverting to a multi-channel multiplexing technique described in ITU-Agg and aggregating the initial channel with the additional channel to make the multi-channel connection.

There is further provided a video telephony, video conferencing or multimedia DTE comprising a communication port, which communication port initiates a multi-channel ISDN call to a further DTE using the above method.

Additionally there is provided a multipoint conference unit (MCU) which supports video telephony, video conferencing or multimedia DTES, comprising a communication port, which communication port initiates a multichannel N-ISDN call to an MCU using the above method.

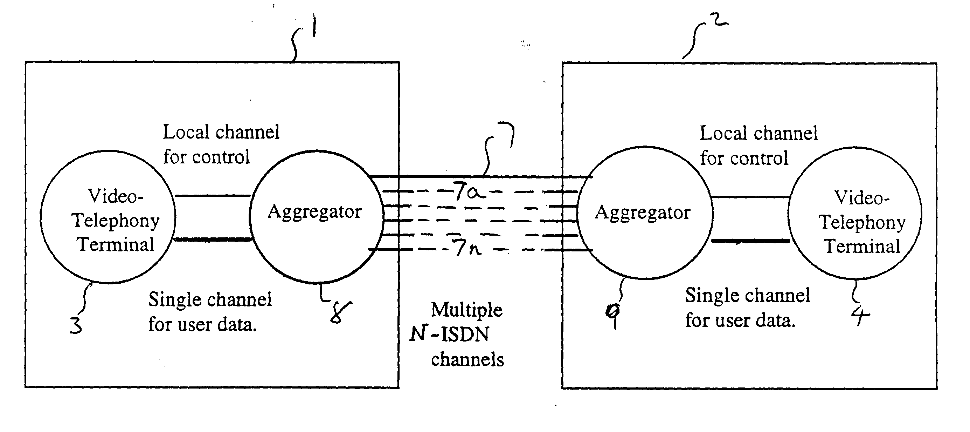

The present invention will now be described by way of example, with reference to the accompanying figure which illustrates a typical video-telephony point to point application.

Two recognized aggregation means are described in the following published documents.
1. ITU-T recommendation H.221 (Frame Structure for a 64 to 1920 kbit/s in audio-visual Teleservices).
2. ISO/IEC 13871, sometimes referring to as BONDING (TM) (Bandwidth ON Demand INterest Group) that being the name of the consortium that evolved the technique (Interoperability requirements for N x 56/64 kbit/s calls).

These will subsequently be referred to as ITU-Agg and ISO-Agg respectively.

The ITU-Agg technique was evolved primarily for the transmission of compressed real time audio-visual data, as described by ITU-T recommendation H.320, Narrowband Visual Telephone Systems and Terminal Equipment and others, and possesses a means of continual monitoring of the integrity of the individual channels and thus is capable of recovery from loss of one channel, although it possesses only a slow means of communicating network data over its service channel.

The ISO-Agg technique was evolved for the transmission of data and has only one mode that is favourable for the transmission of visual-telephony data, which is the clear channel. Whilst ISO-Agg has powerful and fast mechanisms for setting up the connection, when an aggregated clear channel is provided the capability of graceful degradation is lost and the failure of one of the channels would mean failure of the connection.

Both mechanisms are also described in the ITU-T recommendation H.244 (Synchronised Aggregation of Integrated Services Digital Network (ISDN) B-Channels) as differing sub-sets of this recommendation and a procedure is outlined for arbitration between the modes, but the possibility of using the combination in the manner described by the present invention is not acknowledged. ITU-T recommendation H.244 does describe the possibility of using ISO-Agg to set up a clear channel over which transmission of a NON-aggregated form of the ITU-T H.221 data stream, i.e. a single channel of greater than 64 kbit/s, is carried.

Historically, the terminal would have a single channel high bandwidth connection to a separate piece of equipment that would provide aggregation of multiple dialled basic rate channels.

The present invention provides a means of optimizing the call set up time by a combination of use of both mechanisms which has the advantage that the high service channel capability of ISO-Agg is used for rapid communication between both terminals of a point to point application as shown in the figure.

Within the scope of N-ISDN based visual telephony and accepting that it is not the normal practice for a calling terminal to know all the network numbers of the called terminal, upon making a call a video-telephone or multimedia terminal described by the present invention would commence a multi-channel call by sending a digital stream over a single basic rate channel conforming to the requirements of ISO-Agg and to all intents and purposes ignoring the possibility of configuration of the data stream to ITU-Agg. Should both terminals be capable of ISO-Agg the single channel connection will be established and information would be free to flow between both terminals.

Upon establishment of the single channel link with a far end terminal, the calling terminal would then be free to exchange knowledge of identity and capabilities with the far end terminal including the possible supported modes of aggregation and the ISDN numbers for the additional channels required to make the multiple channel connection such that the optimum mode of operation can be mutually agreed.

During the call set up phase the entire single channel is free to be dedicated to end to end signalling and control thus enabling this process to complete the information and capability in the optimum time.

Should both the calling and the called terminals have an agreed capability of aggregation to ITU-Agg, the preferred mode of communication for a video-telephone would be designated as ITU-Agg, at which point the decision would be made for the initial channel to change to the ITU-Agg format and for the additional channels to be dialled up as ITU-Agg channels thus making an aggregated call of N x 56 or 64 kbit/s.

Also the additional advantage of the continual channel integrity monitoring capability of ITU-Agg means that loss of one of the channels should not cause a catastrophic failure of the connection.

Upon making a call an originating Digital Terminating Equipment 1 including a video-telephony or multimedia terminal 3 would commence the call by sending a digital stream from aggregator 8 over a single basic rate channel 7 to aggregator 9 conforming to the requirements of ISO-Agg and to all intents and purposes ignoring the possibility of configuration of the data stream to ITU-Agg.

Should both DTEs 1,2 be capable of ISO-Agg the single channel connection will be established and information would be free to flow between both channels.

Upon establishment of a single channel link 7 with a far end DTE 2, the calling DTE 1 would then be free to exchange knowledge of capabilities with the far end DTE 2 including the possible supported modes of aggregation and the ISDN numbers for the additional channels required to make the multiple channel connection 7a-7n via aggregators 8, 9.

Should both DTES 1, 2 be capable of aggregation to ITU-Agg the preferred mode of communication for a video-telephone would be designated as ITU-Agg, at which point the decision would be made for the initial channel to change to the ITU-Agg format and for the additional channels to be dialled up as ITU-Agg channels.

A multi-point conference unit (MCU) which unit supports video conferencing, video telephony or multimedia terminals may have one or more communication ports, which ports are able to initiate a multi-channel N-ISDN call to a DTE.

## Claims

1. A method of initiating a multi-channel Narrowband Integrated Services Digital Network (N-ISDN) based video-telephony, video-conferencing or multimedia call from a first Digital Termination Equipment (DTE) to a second DTE each DTE comprising an aggregator and comprising the steps of:
a) making a call via an initial channel from the aggregator of the first DTE to the aggregator of the second DTE using the procedures of ISO/IEC 13871 (ISO-Agg); which procedures provide high bandwidth control and communication capability for the initial channel;
b) the first DTE obtaining from the second DTE information regarding channel number identification of additional second DTE channels and capability of support for the procedures of ITU-T recommendation H.221 (ITU-Agg) by the second DTE;
c) using the high bandwidth control and communication capability of the initial channel and reverting to a multi-channel multiplexing technique described in ITU-Agg and aggregating the initial channel with the additional channels to make the multi-channel connection between the aggregators.

2. A video telephony, video conferencing or multimedia DTE comprising a communication port, which communication port initiates a multi-channel N-ISDN call to a further DTE using the method of Claim 1.

3. A multipoint conference unit (MCU) which supports video telephony, video conferencing or multimedia DTEs, comprising a communication port, which communication port initiates a multi-channel N-ISDN call to a DTE using the method of Claim 1.
